# EUROPÄISCHE PATENTSCHRIFT

(11) **EP 3 071 142 B1**
(45) Veröffentlichungstag und Bekanntmachung des Hinweises auf die Patenterteilung: **13.06.2018**
(21) Anmeldenummer: 14798767.1
(22) Anmeldetag: 07.11.2014
(51) Int. Cl.: A61C 13/08

(54) **VERFAHREN UND VORRICHTUNG ZUR HALTERUNG VORKONFEKTIONIERTER PROTHESENZÄHNE**
METHOD AND DEVICE FOR SECURING PREFABRICATED PROSTHETIC TEETH
PROCÉDÉ ET DISPOSITIF DE MAINTIEN DE DENTS PROTHÉTIQUES PRÉFABRIQUÉES

(30) Priorität: 19.11.2013 DE 102013112747
(43) Veröffentlichungstag der Anmeldung: 28.09.2016
(73) Patentinhaber: Kulzer GmbH, 63450 Hanau (DE)
(72) Erfinder: SAVIC, Novica, 63526 Erlensee (DE); RENZ, Karl-Heinz, 63755 Alzenau (DE); STANGE, Frank-Uwe, 88085 Langenargen (DE); ROMBECK, Stefan, 88690 Uhldingen-Mühlhofen (DE)
(74) Vertreter: Schultheiss & Sterzel Patentanwälte PartG mbB
(86) Internationale Anmeldenummer: PCT/EP2014/074034
(87) Internationale Veröffentlichungsnummer: WO 2015/074897

(56) Entgegenhaltungen:
- CN-A- 101 721 256
- DE-A1-102011 101 678
- FR-A1- 2 567 017
- JP-A- 2005 253 756
- US-A- 373 348
- US-A- 5 135 393

## Beschreibung

Die Erfindung betrifft ein Verfahren zur Positionierung und Bearbeitung von Prothesenzähnen.

Die Erfindung betrifft auch eine Vorrichtung zur Halterung von Prothesenzähnen und ein Set zur Durchführung eines solchen Verfahrens mit einer solchen Vorrichtung.

Die Erfindung betrifft somit die Herstellung und Bereitstellung von konfektionierten Zahnblöcken (Prothesenzähnen) zur Weiterverarbeitung für partielle und totale Kunststoffprothesen, die maschinell im CAM-Verfahren (CAM - Computer-Aided Manufacturing, Deutsch: rechner-unterstützte Fertigung) produziert werden und die computergestützt mit CAD-Verfahren (CAD - Computer-Aided Design, Deutsch: rechnerunterstützte Konstruktion) konstruiert werden. Die Zahnblöcke können als Halbzeug zur teilweisen oder vollständigen Herstellung von Kunststoffprothesen mit CAM-Verfahren bereitgestellt werden.

Der derzeit gängige Weg ist die analoge Erstellung von Prothesenzähnen. Dabei werden die Prothesenzähne manuell und einzeln auf einer Wachsbasis aufgestellt. Diese Wachsprothese wird im nächsten Schritt in einer Küvette mit Gips eingebettet, um dann nach Aushärten des Gipses die Wachsbasis mit heißem Wasser herauszuwaschen und einen Hohlraum für den Prothesenkunststoff zu schaffen. Die Prothesenzähne verbleiben dabei im Gips. Ein entsprechender Gips wird in den Hohlraum injiziert oder "gestopft" und man erhält nach Aushärtung des Kunststoffs die Prothese beziehungsweise den fertigen Prothesenzahn.

Bei der Aufstellung vorkonfektionierter Prothesenzähne werden diese der jeweiligen Mundsituation des Patienten vom Zahntechniker angepasst und beschliffen. Es gibt bereits erste Verfahren, wie beispielsweise die aus der DE 10 2009 056 752 A1 oder der WO 2013 124 452 A1 bekannten Verfahren, bei denen die Teil- beziehungsweise Totalprothese digital aufgestellt und über CAD-CAM-Verfahren produziert wird.

Nachteilig ist hieran die Positionierung der Prothesenzähne in einer Prothesenbasisplatte. In der Regel wird dafür eine passgenaue Mulde in einer Prothesenbasisplatte vorgefertigt, um dann die konfektionierten Prothesenzähne einzukleben. Das funktioniert jedoch nur, wenn ausreichend Platz vorhanden ist und die vorkonfektionierten Prothesenzähne nicht von unten (basal) angeschliffen werden müssen. Das ist eher die Ausnahme. In den meisten Fällen muss der Prothesenzahn aus Platzgründen beschliffen werden. Vorkonfektionierte Prothesenzähne sind im Rahmen der Erstellung von prothetischen Arbeiten in der Regel mindestens von basal zu bearbeiten. Bei manueller Umsetzung erfolgt die Bearbeitung einzeln pro Prothesenzahn durch den Verarbeiter. In diesem Fall passt er aber nicht mehr in die vorproduzierte Mulde in der Prothesenbasisplatte.

Die DE 10 2011 101 678 A1 schlägt vor, dass der Kronenbereich eines Prothesenzahns in eine Trägerschicht eingebettet wird und den Prothesenzahn anschließend zu bearbeiten. Diese Befestigung der Prothesenzähne erfolgt entweder mittels Wachs oder aber anderen schmelz- oder aushärtbaren Massen. Dadurch wird eine feste und präzise Verbindung bei gleichzeitig definierter Positionierung der Prothesenzähne erzielt. Nachteilig ist hieran, dass der Prothesenzahn bereichsweise freigelegt werden muss, um den eingebetteten Kronenbereich zu bearbeiten. Die Nachteile des Verfahrens liegen auch in der aufwendigen Herstellung der Körper. Diese sind einzeln oder in Gruppen durch Einsetzen der fertigen Prothesenzähne in einen Halter, Aufsetzen eines Außenrahmens und abschließendes Ausgießen mit einem Verbindungsmedium (z.B. Wachs) herzustellen. Dadurch ist das Eingießen der Prothesenzähne mit der die Trägerschicht bildenden Masse handwerklich aufwendig.

Die Trägerschicht muss aushärten, bevor der Prothesenzahn bearbeitet werden kann, da insbesondere bei der Verwendung von automatisierten CAM-Fräsen erhebliche Kräfte auftreten. Die Positionsgenauigkeit des Verfahrens leidet zudem unter möglichen Verformungen der noch nicht vollständig ausgehärteten Trägerschicht, so dass im Extremfall der nachbearbeitete Prothesenzahn nicht exakt genug ausgefräst wird und deswegen entsorgt werden muss. Ferner kann eine solche Trägerschicht meist nur mit einem gewissen Aufwand wieder vollständig von dem Prothesenzahn entfernt werden. Das Material zur Herstellung der Trägerschicht muss vorgehalten und eventuell vor der Anwendung gemischt, geschmolzen beziehungsweise aktiviert werden. Nach der Verwendung muss es entsorgt werden.

Die Aufgabe der Erfindung besteht also darin, die Nachteile des Stands der Technik zu überwinden. Insbesondere soll eine Vorrichtung und ein Verfahren bereitgestellt werden, mit dem eine möglichst einfache, vollständige und kostengünstige Bearbeitung der Prothesenzähne möglich ist. Dabei sollen möglichst wenige Nachbearbeitungsschritte notwendig sein. Möglichst viele notwendige Teile sollen wiederverwendbar sein. Eine Nachbearbeitung der fertig nachbearbeiteten Prothesenzähne soll unnötig sein.

Die Aufgaben der Erfindung werden gelöst durch ein Verfahren zur Positionierung und Bearbeitung von Prothesenzähnen aufweisend die folgenden Verfahrensschritte:
1) Wenigstens zwei Klemmbacken mit randseitigen Ausnehmungen werden mit den randseitigen Ausnehmungen an einem vorkonfektionierten Prothesenzahn oder an vorkonfektionierten Prothesenzähnen angelegt, so dass die angelegten Klemmbacken den Prothesenzahn oder die Prothesenzähne an jeweils einem mittleren Umfang zumindest bereichsweise umschließen, wobei die Innenflächen der Ausnehmungen zumindest bereichsweise formschlüssig zu Bereichen der Außenflächen des Prothesenzahns oder der Prothesenzähne passen, wobei die Klemmbacken derart an dem Prothesenzahn oder den Prothesenzähnen angelegt werden, dass nach dem Entfernen des Trägers das koronale Ende und das basale Ende des Prothesenzahns oder die koronalen Enden und die basalen Enden der Prothesenzähne auf beiden Seiten der zusammengesetzten Klemmbacken überstehen; und
2) Befestigen der Klemmbacken miteinander.

Es ist erfindungsgemäße bevorzugt, wenn mehrere Prothesenzähne in den Klemmbacken fixiert werden. Dies hat den Vorteil, dass dann anschließend mit einem einzigen Arbeitsschritt mehrere in den Klemmbacken gehaltene Prothesenzähne in einem Vorgang bearbeitet werden können.

Es kann erfindungsgemäß ferner vorgesehen sein, dass die Klemmbacken über ein an den Klemmbacken befestigtes oder befestigbares Befestigungsmittel mit einander befestigt werden.

Ferner kann erfindungsgemäß vorgesehen sein, dass die Klemmbacken derart an dem Prothesenzahn oder den Prothesenzähnen angelegt werden, dass die Klemmbacken an einander und/oder an dem Prothesenzahn oder die Klemmbacken an einander und/oder an den Prothesenzähnen formschlüssig und flächenbündig anliegen.

Hierdurch wird eine besonders stabile und verdrehsichere Halterung bereitgestellt und zudem die auf den Prothesenzahn oder die Prothesenzähne wirkenden Kräfte gleichmäßiger verteilt.

Mit der Erfindung wird auch vorgeschlagen, dass der vorkonfektionierte Prothesenzahn oder die vorkonfektionierten Prothesenzähne koronal und/oder basal auf einen Träger gesetzt werden, bevor sie von den Klemmbacken fixiert werden und der Träger von den Klemmbacken und dem oder den in den Klemmbacken gehaltenen Prothesenzähnen entfernt wird, nachdem die Klemmbacken miteinander verbunden wurden.

Hierdurch ist das Verfahren leichter umsetzbar und handhabbar.

Dadurch, dass die Klemmbacken derart an dem Prothesenzahn oder den Prothesenzähnen angelegt werden, dass nach dem Entfernen des Trägers das koronale Ende und das basale Ende des Prothesenzahns oder die koronalen Enden und die basalen Enden der Prothesenzähne auf beiden Seiten der zusammengesetzten Klemmbacken überstehen, ist es möglich, die Klemmbacken beziehungsweise die Halterung gleichzeitig zur Nachbearbeitung der koronalen Seite oder der okklusalen Seite und der basalen Seite zu verwenden.

Es wird ferner vorgeschlagen, dass die Klemmbacken auf dem Träger an den Prothesenzahn oder die Prothesenzähne angelegt werden.

Hierdurch wird eine besonders einfache Ausrichtung der Klemmbacken zu den Prothesenzähnen erreicht.

Des Weiteren kann vorgesehen sein, dass als Träger eine Trägerplatte mit zumindest einer Mulde für zumindest einen vorkonfektionierten Prothesenzahn verwendet wird, wobei die zumindest eine Mulde ein Negativ der äußeren Form des koronalen Endes oder des basalen Endes eines vorkonfektionierten Prothesenzahns bildet, wobei bevorzugt eine Trägerplatte mit einer Mehrzahl von Mulden für eine Mehrzahl von Prothesenzähnen verwendet wird und jede Mulde ein Negativ der äußeren Form eines koronalen Endes und/oder eines basalen Endes der vorkonfektionierten Prothesenzähne bildet.

Trägerplatten stellen die einfachste Form eines Trägers dar und können zudem bei der Ausrichtung der Klemmbacken hilfreich sein.

Mit einer Weiterentwicklung der Erfindung wird auch vorgeschlagen, dass, insbesondere nach dem Entfernen des Trägers, die miteinander befestigten Klemmbacken in einer definierten Position in einer Halterung einer CAM-Vorrichtung zum Abtragen von Material der Prothesenzähne oder des Prothesenzahns mit einem CAM-Verfahren befestigt werden und wenigstens ein koronales Ende und/oder wenigstens ein basales Ende zumindest eines Prothesenzahns computergesteuert mit der CAM-Vorrichtung bearbeitet wird, wobei die CAM-Vorrichtung bevorzugt eine CAM-gesteuerte Fräseinrichtung ist, besonders bevorzugt eine CAM-gesteuerte Vier-Achs-Fräse.

Dieser Schritt nutzt die Vorteile, die eine erfindungsgemäße Vorrichtung und das erfindungsgemäße Verfahren zur Positionierung bietet, für automatisierte Verfahren, bei denen sich die erfindungsgemäße exakte Positionierung besonders vorteilhaft auswirkt.

Bevorzugte Ausgestaltungen des Verfahrens können auch vorsehen, dass die äußeren Formen aller verwendeten vorkonfektionierten Prothesenzähne als erster Datensatz vorliegen und ein zweiter Datensatz die genaue Positionen aller fixierten vorkonfektionierten Prothesenzähne in den zusammengesetzten Klemmbacken definiert, wobei eine anschließende Bearbeitung des Prothesenzahns oder der Prothesenzähne auf Basis des ersten und des zweiten Datensatzes durchgeführt wird, bevorzugt eine anschließende Bearbeitung mit einem CAD/CAM-Verfahren.

Hierdurch werden die Vorteile der Fixierung für vollautomatisierte Nachbearbeitungsverfahren zugänglich gemacht, für die sie besonders gut geeignet sind. Erst durch die beanspruchte Fixierung wird nämlich eine einfache und kostengünstige Bereitstellung der Prothesenzähne in einer hohen Genauigkeit und Positionstreue möglich.

Bevorzugte Verfahren können aus vorsehen, dass alle vorkonfektionierten Prothesenzähne nur in jeweils einer vorgegebenen Position und Orientierung in den zusammengesetzten Klemmbacken fixiert werden.

Hierdurch wird sichergestellt, dass eine eindeutige Position die Orientierung zur Nachbearbeitung vorliegt, ohne dass die Position und die Orientierung noch einmal kontrolliert werden müssten.

Mit einer Weiterentwicklung der Erfindung wird vorgeschlagen, dass der verwendete vorkonfektionierte Prothesenzahn oder die verwendeten vorkonfektionierten Prothesenzähne mit einem CAD-Verfahren hergestellt werden, wobei die Daten, die zur Bestimmung der äußeren Form der Oberfläche des vorkonfektionierten Prothesenzahns oder der vorkonfektionierten Prothesenzähne verwendet werden, zur Ausformung der Ausnehmungen der Klemmbacken verwendet werden, wobei vorzugsweise zumindest die Ausnehmungen in den Klemmbacken mit einem CAD/CAM-Verfahren hergestellt werden.

Hierdurch wird eine weitere Automatisierung des erfindungsgemäßen Verfahrens erreicht.

Ferner wird vorgeschlagen, dass vor dem Anlegen der Klemmbacken an den vorkonfektionierten Prothesenzahn oder die vorkonfektionierten Prothesenzähne ein Haftvermittler in der Oberfläche der Ausnehmungen oder auf der Oberfläche des Prothesenzahns oder an den Oberflächen der Prothesenzähne aufgetragen wird.

Hierdurch kann ein besserer Halt der Prothesenzähne in den Ausnehmungen der Klemmbacken erreicht werden. Der Haftvermittler muss jedoch im Normalfall wieder von den Prothesenzähnen entfernt werden, wenn er nicht von selbst verdampft.

Des Weiteren kann erfindungsgemäß vorgesehen sein, dass in Schritt 1) die Klemmbacken derart an den Prothesenzahn oder die Prothesenzähne angelegt werden, dass die angelegten Klemmbacken den Prothesenzahn oder die Prothesenzähne an jeweils einem mittleren Umfang ringförmig vollständig umschließen und die Klemmbacken beidseitig des Prothesenzahns oder der Prothesenzähne flächig aneinander anliegen, wobei jeder Prothesenzahn in einer separaten durchgehenden Durchführung der zusammengesetzten Klemmbacken fixiert wird und jede Durchführung durch die Ausnehmungen wenigstens zweier Klemmbacken gebildet wird, und in Schritt 2) die Klemmbacken an einander befestigt werden.

Hierdurch wird eine allseitige Fixierung der Prothesenzähne erreicht.

Die Aufgaben der Erfindung werden auch gelöst durch eine Vorrichtung zur Halterung von Prothesenzähnen aufweisend zumindest zwei miteinander zusammensetzbare oder zusammengesetzte Klemmbacken, die randseitig an den Klemmbacken angeordnete Ausnehmungen aufweisen, wobei die Vorrichtung im zusammengesetzten Zustand wenigstens eine durchgehende Durchführung oder zumindest eine durchgehende Spalte aufweist, vorzugsweise mehrere durchgehende Durchführungen aufweist, wobei jede Durchführung oder Spalte durch die randseitig an den Klemmbacken angeordneten Ausnehmungen jeweils wenigstens zweier Klemmbacken begrenzt sind, wobei die inneren Oberflächen der Ausnehmungen zumindest bereichsweise jeweils ein Negativ eines Teils der Oberfläche eines bestimmten vorkonfektionierten Prothesenzahns bilden, so dass, wenn der bestimmte Prothesenzahn in die Durchführung oder die Ausnehmungen der Spalte eingesetzt ist, er aus zumindest drei Richtungen von den zusammengesetzten und aneinander befestigten Klemmbacken in Presspassung gehalten ist.

Durchgehend bedeutet in diesem Zusammenhang, dass die Durchführung oder der Spalt sich von einer Seite zu einer gegenüberliegenden Seite der zusammengesetzten Klemmbacken erstreckt.

Dabei kann vorgesehen sein, dass an den Klemmbacken Befestigungsmittel vorgesehen sind, über die die Klemmbacken aneinander zu befestigen sind.

Vorzugsweise können in den Klemmbacken oder an den Klemmbacken Bohrungen mit einem Innengewinde vorgesehen sein, die im zusammengesetzten Zustand übereinander liegen, wobei die Vorrichtung eine Schraube oder bevorzugt mehrere Schrauben mit zu dem Innengewinde passendem Außengewinde aufweist. Mit der Schraube oder den Schrauben können die Klemmbacken verschraubt werden.

Alternativ dazu kann vorgesehen sein, dass Bohrungen ohne Innengewinde vorgesehen sind und die Klemmbacken mit einer Schraube und einer Kontermutter aneinander befestigt werden.

Weitere mögliche Ausgestaltungen der Befestigungsmittel sind Klickverbindungen, Nut und Feder, Rastverbindungen oder Steckverbindungen. Solche Befestigungsmittel sind bevorzugt an den Verbindungsflächen zwischen den Klemmbacken angeordnet.

Mit einer Weiterbildung der Erfindung wird vorgeschlagen, dass die Klemmbacken aus einem harten nicht verformbaren Material bestehen, bevorzugt aus einem Material mit einem Elastizitätsmodul von wenigstens 1,5 GPa besonders bevorzugt von wenigstens 4 GPa.

Materialien mit solchen Elastizitätsmoduln sind besonders für die Klemmbacken geeignet, da es insbesondere auf eine Formstabilität der Klemmbacken ankommt.

Es kann auch vorgesehen sein, dass der Prothesenzahn oder die Prothesenzähne nur in einer vorgegebenen Position und Orientierung in den zusammengesetzten Klemmbacken fixierbar sind.

Hierdurch wird eine eindeutige Position und Orientierung der Prothesenzähne sichergestellt.

Es wird auch vorgeschlagen, dass das koronale Ende und das basale Ende des Prothesenzahns oder die koronalen Enden und die basalen Enden der Prothesenzähne auf beiden Seiten der zusammengesetzten Klemmbacken überstehen, wenn der Prothesenzahn oder die Prothesenzähne in die zusammengesetzten Klemmbacken eingesetzt ist oder sind, damit die eingespannten Prothesenzähne von beiden Seiten, nämlich der koronalen Seite beziehungsweise der okklusalen Seite und der basalen Seite nachbearbeitet werden können.

Die der Erfindung zugrundeliegenden Aufgaben werden auch gelöst durch ein Set zur Durchführung eines solchen Verfahrens aufweisend wenigstens einen vorkonfektionierten Prothesenzahn, vorzugsweise eine Mehrzahl vorkonfektionierter Prothesenzähne, und wenigstens eine solche Vorrichtung.

Dabei kann vorgesehen sein, dass das Set zusätzlich einen Träger mit wenigstens einer Mulde zur Aufnahme eines koronalen oder basalen Endes zumindest eines vorkonfektionierten Prothesenzahns aufweist, insbesondere eine Trägerplatte mit wenigstens einer Mulde zur Aufnahme eines koronalen oder basalen Endes eines vorkonfektionierten Prothesenzahns aufweist.

Die Kombination des Sets mit einem Träger macht das Set vollständiger und für den Anwender leichter einsetzbar.

Schließlich kann vorgesehen sein, dass das Set zusätzlich den ersten Datensatz zur äußeren Form aller vorkonfektionierten Prothesenzähne und den zweiten Datensatz zur Position der vorkonfektionierten Prothesenzähne in den zusammengesetzten Klemmbacken enthält, bevorzugt auf einem Datenträger.

Hierdurch wird eine vollautomatisierte Nachbearbeitung der Prothesenzähne vereinfacht.

Der Erfindung liegt die überraschende Erkenntnis zugrunde, dass es durch die Verwendung vorkonfektionierter Prothesenzähne mit bekannter und/oder standardisierter Form gelingt, mit Hilfe von zu den vorkonfektionierten Prothesenzähnen passenden Klemmbacken die Prothesenzähnen ortsfest und orientiert in einem mittleren Bereich einzuspannen, so dass die Prothesenzähne sowohl basal als auch koronal zugänglich sind und nachbearbeitet werden können.

Das Verfahren und die Vorrichtung und das Set sind besonders gut zur Bearbeitung mit CAD/CAM-Verfahren geeignet. Die nachbearbeiteten Prothesenzähne können durch Lösen der Befestigungsmittel der Klemmbacken rückstandsfrei entfernt werden und stehen sofort zur Behandlung eines Patienten zur Verfügung. Die Befestigung der Prothesenzähne ist schnell und unkompliziert durchführbar. Die Klemmbacken sind problemlos wiederverwendbar. Eine aufwendige Herstellung der Halterung, wie bei Wachshalterungen notwendig, entfällt bei dem erfindungsgemäßen Verfahren.

Die Vorrichtung und die Klemmbacken sind gegenüber äußeren Einflüssen wie Hitze oder Kälte stabil und es kommt nicht zum Verziehen oder zu Verformungen der Vorrichtung beziehungsweise der Klemmbacken und damit nicht zu Positionsänderungen der Prothesenzähne innerhalb der Vorrichtung beziehungsweise der Klemmbacken.

Der große Vorteil erfindungsgemäßer Verfahren liegt in der sehr schnellen und nahezu werkzeug- und hilfsmittellosen Umsetzung. Dadurch kann auf das Vorhalten größerer Lagermengen verzichtet werden und eine bestellbezogene Konfektionierung vorgenommen werden. Auch entfällt die sonst bei Wachs notwendige Reinigung mittels Ausbrühen oder Putzen der Prothesenzähne.

Auch in Bezug auf Kosten ist das Verfahren sehr effizient, da je nach Grad des Beschleifens der Prothesenzähne eine Wiederverwendbarkeit der Klemmbacken besteht.

Es wurde festgestellt, dass sich überraschenderweise eine gute Fixierung der Prothesenzähne schon bei geringen Höhen der Klemmbacken erzielen lässt. Das Einbringen von Kontaktmitteln kann die Verbindung noch verbessern. Als beispielhaftes Kontaktmittel kann Polyvinylalkohol eingesetzt werden, das nach Abdampfen enthaltener Lösemittel eine haftende Verbindungsschicht bildet.

Die Erfindung kann beispielsweise vorsehen, dass die Prothesenzähne in den Klemmbacken als Halterung bereitgestellt werden, so dass sie im CAM-Verfahren unmittelbar maschinell geschliffen werden können und somit der individuellen Situation des Patienten angepasst werden können. Primär wird dabei die basale Fläche geschliffen, jedoch kann auch die okklusale Fläche zur individuellen Anpassung der Kaufunktion ebenfalls maschinell nachbearbeitet werden.

Um diesen technischen Ansatz umsetzen zu können, müssen die konfektionierten Prothesenzähne in einer vordefinierten Position innerhalb der in die Maschine einspannbaren Klemmbacken positioniert und festgehalten werden. Die zusammengesetzten Klemmbacken können unterschiedliche Formen haben (quadratisch, rechteckig, rund, etc.) und sind zweckmäßigerweise an den Aufnahmemechanismus der jeweiligen CAM-Maschine angepasst. Hierzu kann erfindungsgemäß vorgesehen sein, dass an den Klemmbacken oder an wenigstens einer der Klemmbacken eine Halterung zur Befestigung in der CAM-Maschine vorgesehen ist. Die vorgefertigten konfektionierten Prothesenzähne werden dabei von den Klemmbacken in Presspassung gehalten. Die Prothesenzähne und die Klemmbacken werden beim Entnehmen der Prothesenzähne nicht beschädigt und können gegebenenfalls wiederverwendet werden.

Die Prothesenzähne werden über zwei vorgefertigte Formteile beziehungsweise Klemmbacken fixiert. Diese werden jeweils seitlich am Prothesenzahn positioniert und dann gegeneinander fest verbunden (beispielsweise durch Verkleben, Verschrauben, Klick-Mechanismus über Retentionen). Dadurch werden die Prothesenzähne zwischen den Klemmbacken in definierter Position und Orientierung geklemmt. Optional kann die Positionierung der beiden Klemmbacken gegeneinander mit zusätzlichen Führungen, Passstiften oder Ähnlichem gegeneinander abgesichert werden.

Optional sind die Klemmbacken wiederverwendbar durch Öffnen und Einsetzen neuer Prothesenzähne. Die Klemmbacken verfügen Außen über eine, an die Aufnahmen verschiedener Fräsmaschinen angepasste Geometrien.

Die Klemmbacken bestehen aus deformationsstabilem Material, zum Beispiel ein elastisches Kunststoffmaterial wie Polymethylmethacrylat - PMMA oder Polyurethan - PU oder andere Kunststoffe mit Füllstoffanteilen oder aber metallische Werkstoffe. Die Klemmbacken werden bevorzugt durch Frästechnik hergestellt, können aber auch im Spritzguss oder Sinterverfahren hergestellt sein.

Die Klemmbacken weisen erfindungsgemäß bevorzugt zum besseren Fassen der Prothesenzähne eine Höhe zwischen 3 mm und 10 mm aus. Optional kann vor dem Einsetzen der Prothesenzähne ein zusätzliches Kontaktmittel eingebracht werden (beispielsweise Polyvinylalkohol - PVA)

Optional wird eine zusätzliche Trägerplatte zur Vorpositionierung der Prothesenzähne verwendet.

Im Folgenden werden Ausführungsbeispiele der Erfindung anhand von neun schematisch dargestellten Figuren erläutert, ohne jedoch dabei die Erfindung zu beschränken. Dabei zeigt:
- Figur 1:: eine schematische transparente Seitenansicht einer erfindungsgemäßen Vorrichtung;
- Figur 2:: eine schematische perspektivische Ansicht einer erfindungsgemäßen Vorrichtung, in der sechs Prothesenzähne fixiert sind;
- Figur 3:: eine schematische Aufsicht auf eine Trägerplatte eines erfindungsgemäßen Sets;
- Figur 4:: eine schematische Aufsicht auf eine Trägerplatte eines erfindungsgemäßen Sets mit vier eingesetzten Prothesenzähnen;
- Figur 5:: eine schematische perspektivische Ansicht einer auf eine Trägerplatte und eine an die Prothesenzähne angelegte Klemmbacke einer erfindungsgemäßen Vorrichtung;
- Figur 6:: eine schematische perspektivische Ansicht zweier auf einer Trägerplatte und an Prothesenzähnen angelegte Klemmbacken einer erfindungsgemäßen Vorrichtung;
- Figur 7:: eine schematische perspektivische Ansicht einer erfindungsgemäßen Vorrichtung, in der vier Prothesenzähnen fixiert sind;
- Figur 8:: eine schematische perspektivische Ansicht einer erfindungsgemäßen Vorrichtung mit drei Klemmbacken, in der zwölf Prothesenzähne fixiert sind; und
- Figur 9:: eine schematische Aufsicht auf eine weitere erfindungsgemäße Vorrichtung, in der drei Prothesenzähne fixiert sind.

In den Figuren werden auch bei unterschiedlichen Ausführungen für gleichartige Teile teilweise die gleichen Bezugszeichen verwendet.

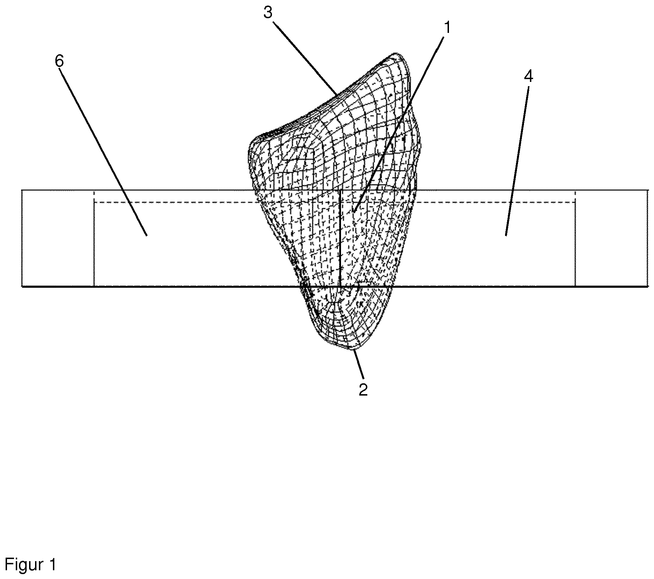

Figur 1 zeigt eine schematische transparente Seitenansicht einer erfindungsgemäßen Vorrichtung. In der Vorrichtung ist ein Prothesenzahn 1 mit einem basalen Ende 2 und einem koronalen Ende 3 eingespannt. Die Vorrichtung weist zwei Klemmbacken 4, 6 aus einem formstabilen Kunststoff auf, zwischen denen der Prothesenzahn 1 eingespannt ist. Die gestrichelten Linien deuten an, dass die Klemmbacken 4, 6 in der zum Prothesenzahn 1 gerichteten Richtung etwas flacher sind. Dies hat den Vorteil, dass der durch die zusammengesetzten Klemmbacken 4, 6 gebildete erhabene Rahmen eine höhere Stabilität der gesamten Vorrichtung bietet und gleichzeitig möglichst große Bereiche des Prothesenzahns 1 beziehungsweise der basalen Seite 2 und der koronalen Seite 3 des Prothesenzahns 1 zur Bearbeitung erreichbar sind. Die mittlere durchgezogene Linie zwischen den Klemmbacken 4, 6 stellt die Kontaktfläche zwischen den zusammengesetzten Klemmbacken 4, 6 dar.

Der Prothesenzahn 1 wird zunächst mit Hilfe eines Trägers (nicht gezeigt) gehalten. Der Träger hält den Prothesenzahn 1 auf der basalen Seite 2 oder auf der koronalen Seite 3. Der mittlere Bereich dazwischen, an dem die Klemmbacken 4, 6 anliegen sollen, darf nicht durch den Träger abgedeckt werden. Anschließend werden die Klemmbacken 4, 6 an diesem mittleren Bereich angelegt und über ein Befestigungsmittel (nicht gezeigt) miteinander verbunden. Dazu sind in den Klemmbacken randseitige Ausnehmungen vorgesehen, in denen in Figur 1 der Prothesenzahn 1 enthalten ist. Die randseitigen Ausnehmungen bilden im zusammengesetzten Zustand der Klemmbacken 4, 6, ohne dass ein Prothesenzahn 1 eingesetzt ist, eine durchgehende Durchführung durch die Vorrichtung, die zur Halterung des Prothesenzahns 1 dient.

Alternativ zur Verwendung eines Trägers kann der Prothesenzahn 1 auch direkt in die Ausnehmung einer der Klemmbacken 4 gesteckt werden. Dabei ist dann aber auf eine einigermaßen genaue Positionierung zu achten. Anschließend wird die zweite Klemmbacke 6 angelegt, aufgedrückt und an der ersten Klemmbacke 4 befestigt. Hierdurch wird der Prothesenzahn 1 orientiert und fixiert.

Es kann ein Klebstoff oder Haftmittel verwendet werden, um die Klemmbacken 4, 6 aneinander zu halten. Ein lösbares Befestigungsmittel wie eine Schraube oder ein leicht lösbares Befestigungsmittel wie eine Klammer sind jedoch bevorzugt. Es ist wichtig, dass die beiden Klemmbacken 4, 6 und der Prothesenzahn 1 starr und positionsfest zueinander fixiert sind, damit der genaue Ort und die exakte Ausrichtung des Prothesenzahns 1 eindeutig festgelegt ist, wenn die Vorrichtung mit dem Prothesenzahn 1 zur Nachbearbeitung in eine Fräsmaschine oder eine andere Vorrichtung zur Durchführung eines subtraktiven Verfahrens an dem Prothesenzahn 1 eingespannt wird. Zum einen darf der Prothesenzahn 1 sich nicht durch die mechanischen Belastungen bei der Bearbeitung bewegen und zum anderen muss die ursprüngliche Position bei der Anwendung von CAM-Techniken genau bekannt sein, um den hohen Anforderungen an die Genauigkeit bezüglich der exakten Form von Prothesenzähnen zu genügen.

Die Klemmbacken 4, 6 müssen zur genauen Ortsfestigkeit des Prothesenzahns 1 aus einem harten, starren und vor allem formstabilen Material bestehen. Bevorzugt aus einem harten Plastik oder Kunststoff wie PMMA oder PU. Die genaue Halterung des Prothesenzahns 1 ist insbesondere und erfindungsgemäß bevorzugt dann möglich, wenn die Ausnehmungen in den Klemmbacken 4, 6, in der der Prothesenzahn 1 gehalten wird beziehungsweise werden soll, basierend auf der gleichen Form beziehungsweise den gleichen Daten hergestellt wurde, mit der beziehungsweise mit denen auch der Prothesenzahn 1 selbst hergestellt wurde. Wenn also sowohl der Prothesenzahn 1 als auch die inneren Oberflächen der Ausnehmung der Klemmbacken 4, 6 mit einem CAD/CAM-Verfahren basierend auf den gleichen Daten zur Form der Oberflächen hergestellt werden, ist eine genaue Passform und eine stabile ortsfeste und ausrichtungsfeste (orientierungsfeste) Fixierung des Prothesenzahns 1 in der Vorrichtung möglich. Diese erfindungsgemäße Erkenntnis betrifft auch alle anderen Ausführungsbeispiele und gilt ganz generell. Da die Anzahl der durch CAD/CAM-Verfahren auf dem Markt verfügbaren Prothesenzähne 1 stetig zunimmt, ist der erfindungsgemäße Aufbau immer häufiger anwendbar.

Die basale Seite 2 und die koronale Seite 3 des Prothesenzahns 1 ragen über die zusammengesetzten Klemmbacken 4, 6 hinaus, so dass beide Seiten 2, 3 in einem Arbeitsschritt bearbeitet werden können.

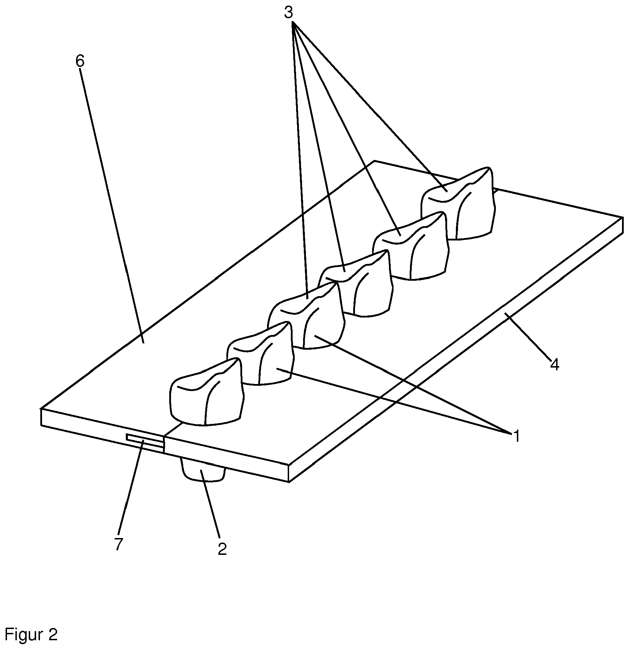

In Figur 1 ist nur ein Prothesenzahn 1 abgebildet. Es können sich aber dahinter in einer Reihe noch weitere Prothesenzähne (in Figur 1 nicht zu erkennen) befinden, wie dies in Figur 2 gezeigt ist.

Figur 2 zeigt dazu eine schematische perspektivische Ansicht einer erfindungsgemäßen Vorrichtung, in der sechs Prothesenzähne 1 mit jeweils einer basalen Seite 2 und einer koronalen Seite 3 fixiert sind. Die Vorrichtung besteht aus zwei Teilen, nämlich einer ersten Klemmbacke 4 und einer zweiten Klemmbacke 6. Die erste Klemmbacke 4 weist randseitig an der Verbindungfläche zur zweiten Klemmbacke 6 zumindest einen Stift 7 oder zumindest eine Feder 7 auf, die in eine Nut oder Vertiefung der zweiten Klemmbacke 6 auf der korrespondierenden Anlageseite steckbar ist. Durch das Nut-und-Feder-System sind die beiden Klemmbacken 4, 6 stabil miteinander verbindbar.

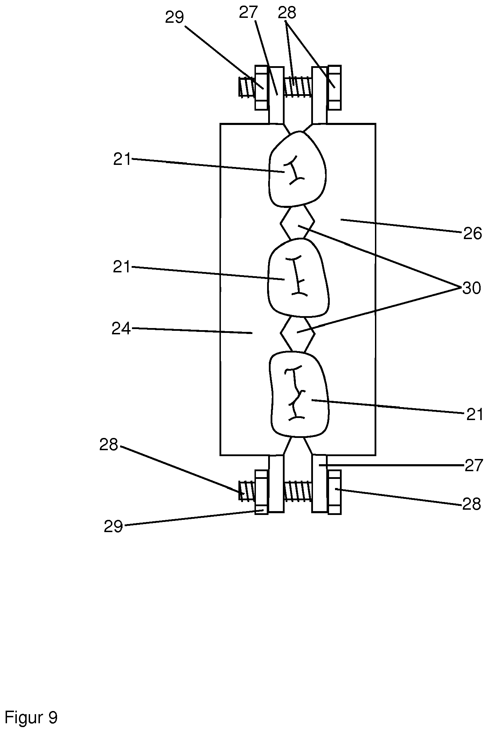

In den Klemmbacken 4, 6 sind randseitig auf der Verbindungsseite zu der jeweils anderen Klemmbacke 4, 6 jeweils sechs Ausnehmungen vorgesehen, die grob gesehen halbkreisförmig sind, so dass sich in der zusammengesetzten Vorrichtung grob gesehen kreisförmige Durchführungen bilden, wobei deren Innenflächen genaugenommen ein Negativ der äußeren Form der zu verwendenden Prothesenzähne 1 sind, so dass in jedem der sechs Durchführungen beziehungsweise in jeder der sechs Ausnehmungen genau ein Prothesenzahn 1 fixierbar ist. Es ist hier und in den folgenden Ausführungsbeispielen, bis auf das Ausführungsbeispiel nach Figur 9, stets nur eine Sorte Prothesenzähne 1 oder sehr ähnliche Prothesenzähne 1 dargestellt. Es können aber auch genauso gut verschiedene Prothesenzähne 1 als Ersatz für Schneidezähne, Backenzähne, Eckzähne, usw. jeweils eindeutig in die Ausnehmungen einsetzbar sein. Genaugenommen ist eine solche Vorrichtung, bei der verschiedene Prothesenzähne 1 für verschiedene Zahntypen gehalten werden können, erfindungsgemäß bevorzugt.

Die Innenflächen der Ausnehmungen sind an die äußere Form des jeweiligen Prothesenzahns 1 angepasst, so dass jeder Prothesenzahn 1 eine bestimmte Ausnehmung in der Klemmbacke 4, 6 und damit eine bestimmte Position beziehungsweise eine bestimmte Durchführung in der zusammengesetzten Vorrichtung zugeordnet ist. Diese Ausführungen stellen ein allgemeingültiges Prinzip einer vorteilhaften Ausgestaltung der Erfindung dar und sind auf alle Ausführungsformen zur Halterung mehrerer Prothesenzähne 1 übertragbar. Der Vorteil ist darin zu sehen, dass die Nachbearbeitung mehrerer Prothesenzähne 1 für einen einzigen Patienten durchgeführt werden kann.

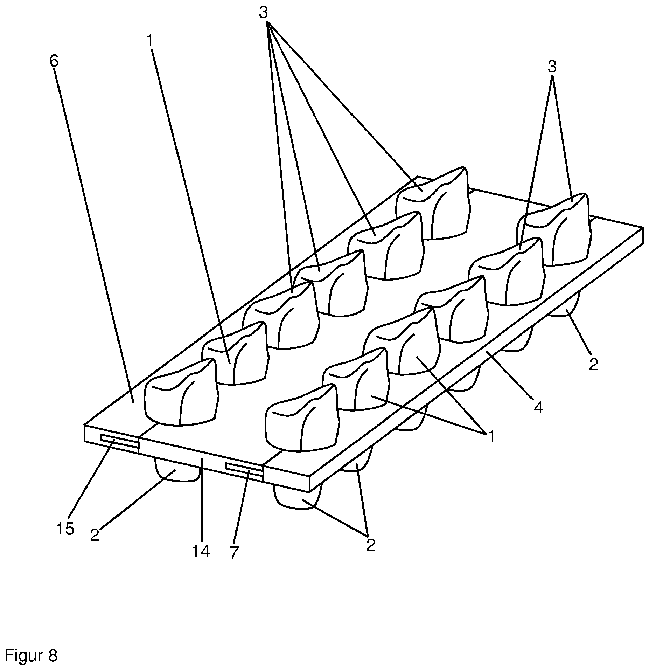

Die Prothesenzähne 1 sind in Figur 2 in einer Reihe angeordnet. Bei einer entsprechenden Anordnung der Ausnehmungen können diese auch versetzt zueinander angeordnet sein. Bei der Verwendung von mehr als zwei Klemmbacken 4, 6 können auch mehr als eine Reihe von Prothesenzähnen 1 gehalten werden (siehe das Ausführungsbeispiel nach Figur 8). Die Klemmbacken 4, 6 bestehen wieder aus einem starren und harten und formstabilen Material. Das Material hat einen Elastizitätsmodul von zumindest 10 GPa, um einer Verformung der Klemmbacken 4, 6 bei den mechanischen Belastungen durch die Nachbearbeitung der Prothesenzähne 1 zu widerstehen.

Die eingespannten und fixierten Prothesenzähne 1 können mit der Vorrichtung in eine computergesteuerte CAM-Vier-Achs-Fräse eingespannt werden, um die zugänglichen basalen Seiten 2 und koronalen Seiten 3 aller Prothesenzähne 1 zu bearbeiten. Die Nut der zweiten Klemmbacke 6 und die Feder 7 der ersten Klemmbacke 4 dienen als Befestigungsmittel. Um die Prothesenzähne 1 in den Klemmbacken 4, 6 einzuspannen, müssen sie in den richtigen Positionen gehalten werden. Hierzu kann eine Trägerplatte (nicht gezeigt) verwendet werden.

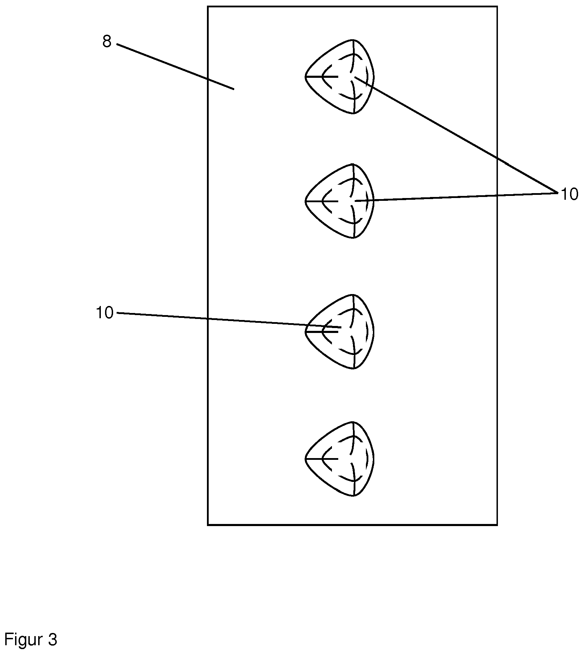

Figur 3 zeigt eine schematische Aufsicht auf eine solche Trägerplatte 8 eines erfindungsgemäßen Sets zur Umsetzung eines erfindungsgemäßen Verfahrens. Die Abfolge erfindungsgemäßer Verfahrensschritte ist in den Figuren 3 bis 7 dargestellt.

Die Trägerplatte 8 kann aus einem einfachen Kunststoff bestehen. In der Trägerplatte 8 sind vier Mulden 10 zur Positionierung von Prothesenzähnen (in Figur 3 nicht gezeigt) dargestellt. Die Mulden 10 stellen ein Negativ der Außenform von vier basalen Enden von Prothesenzähnen dar, so dass die Prothesenzähne eindeutig und korrekt orientiert eingesetzt werden können und müssen. Alternativ zu den gezeigten gleichförmigen Mulden 10 können bevorzugt auch verschiedene Mulden 10 für unterschiedliche Prothesenzähne unterschiedlicher Zahntypen vorgesehen sein. Als nächstes werden vier Prothesenzähne 1 in die Mulden 10 eingesetzt.

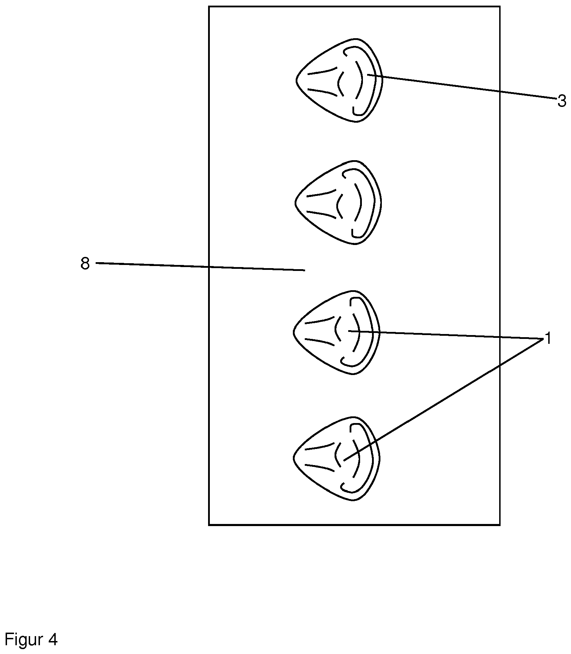

Figur 4 zeigt eine schematische Aufsicht auf die Trägerplatte 8 eines erfindungsgemäßen Sets mit vier eingesetzten Prothesenzähnen 1. Die Prothesenzähne 1 können nur in einer bestimmten Position und einer bestimmten Orientierung in die Mulden 10 eingesetzt werden. Die Prothesenzähne 1 sind nur lose in die Trägerplatte 8 eingelegt. Es kann aber auch vorgesehen sein, dass die Prothesenzähne 1 mit einem Haftvermittler in den Mulden 10 anhaften oder durch eine geeignete Form der Mulden 10 in einer leichten Presspassung in den Mulden 10 halten. Die koronalen Seiten 3 der Prothesenzähne 1 liegen bei dieser Anordnung frei. Es kann aber auch vorgesehen sein, dass die Prothesenzähne 1 mit der koronalen Seite 3 in dazu passenden Mulden 10 liegen. Auch ist eine gemischte Ausrichtung möglich, wenn auch nicht vorteilhaft.

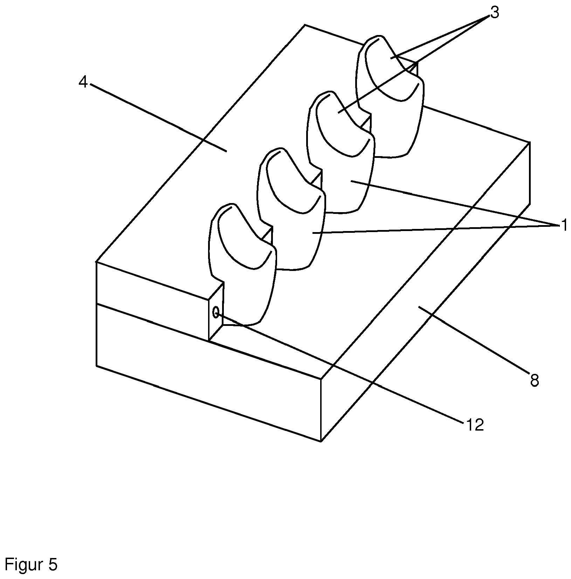

Als nächstes wird eine erste Klemmbacke 4 aus einem Material mit einem ausreichend hohen Elastizitätsmodul (über 1,5 GPa) und mit vier, zu der Außenform der in der Trägerplatte 8 positionierten Prothesenzähne 1 passenden, halbrunden Ausnehmungen auf die Trägerplatte 8 aufgelegt und an die Prothesenzähne 1 angelegt. Figur 5 zeigt eine schematische perspektivische Ansicht der auf der Trägerplatte 8 und an Prothesenzähne 1 angelegten ersten Klemmbacke 4 einer erfindungsgemäßen Vorrichtung. Die inneren Oberflächen der Ausnehmungen entsprechen den Außenformen der Prothesenzähne 1 in einem mittleren Bereich, der in einer Höhe der Prothesenzähne 1 beginnt, die aus den Mulden 10 der Trägerplatte 8 herausragt.

Die inneren Oberflächen der vier Ausnehmungen und die Form der Mulden 10 kann mit einem CAD/CAM-Verfahren erzeugt werden, indem die zur Herstellung der Prothesenzähne 1 verwendeten Formen als Datensatz verwendet oder zuvor eingelesen oder eingescannt werden. An der Verbindungsfläche zur einer zweiten Klemmbacke 6 (in Figur 5 nicht zu sehen) sind Klickmechanismen 12 oder Rastverbindungen 12 vorgesehen, die zu entsprechenden Gegenstücken an der Verbindungsfläche der zweiten Klemmbacke 6 passen. Als nächster Verfahrensschritt wird also die zweite Klemmbacke 6 angelegt.

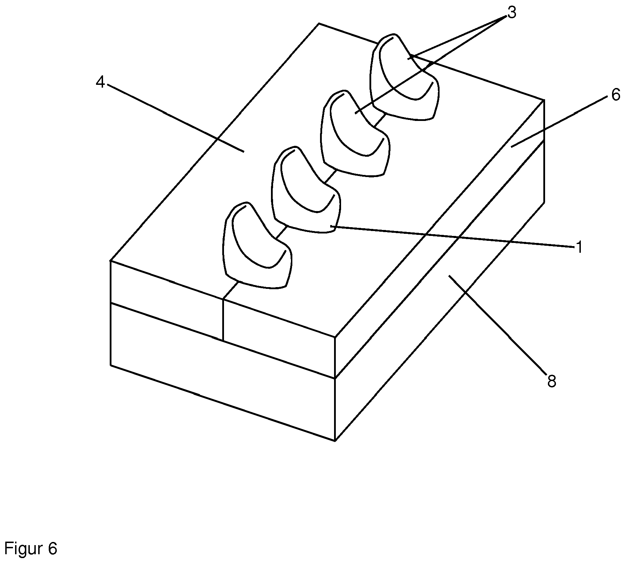

Figur 6 zeigt eine schematische perspektivische Ansicht zweier auf der Trägerplatte 8 und an die vier Prothesenzähne 1 angelegte Klemmbacken 4, 6 einer erfindungsgemäßen Vorrichtung. Die Klemmbacken 4, 6 sind über die Klickmechanismen 12 oder Rastverbindungen 12 miteinander verbunden. Ohne besondere Nachteile könnten die Klemmbacken 4, 6 auch einmal oder mehrfach in eine größere Anzahl von Klemmbacken unterteilt sein. Es wäre beispielsweise auch möglich für jeden Prothesenzahn 1 jeweils zwei Klemmbacken 4, 6 vorzusehen und die verschiedenen Klemmbacken 4, 6 seitlich miteinander verbindbar zu gestalten. Ein solches System hat den Vorteil, dass immer nur die gewünschten Prothesenzähne 1 eingespannt werden und keine ungefüllten Durchführungen in der Vorrichtung verbleiben. Ein solches System stellt eine besonders variable und daher erfindungsgemäß besonders bevorzugt Weiterentwicklung der vorliegenden Erfindung dar. Auch die zweite Klemmbacke 6 wird auf dem Träger 8 an den Prothesenzähnen 1 angelegt. Genau wie bei der ersten Klemmbacke 4 weist die zweite Klemmbacke 6 zu den Prothesenzähnen 1 passende Ausnehmungen auf, die die Prothesenzähne 1 in einem mittleren Bereich halbseitig umschließen und dort flächenbündig und formschlüssig anliegen.

Theoretisch ist es ausreichend, wenn nur Teilbereiche der Innenflächen der Ausnehmungen der beiden Klemmbacken 4, 6 an den Prothesenzähnen 1 anliegen. Wenigstens aus drei Richtungen sollten die zusammengesetzten Klemmbacken 4, 6 in diesem Fall auf die Prothesenzähne 1 drücken, damit diese stabil gehalten werden und sich nicht um eine Achse in der Ebene der Klammbacken 4, 6 drehen können. Es ist jedoch besser und erfindungsgemäß bevorzugt, wenn die Ausnehmungen der Klemmbacken 4, 6 beziehungsweise die durch die Ausnehmungen der zusammengesetzten Klemmbacken 4, 6 gebildeten Durchführungen der Vorrichtung vollumfänglich, flächig und formschlüssig an den Prothesenzähnen 1 anliegen, da dadurch einerseits ein stabiler Halt der Prothesenzähne 1 in der Vorrichtung sichergestellt ist und andererseits die Gefahr einer Verformung oder Beschädigung der Prothesenzähne 1 durch die harten Klemmbacken 4, 6 vermieden werden kann. Je höher der Elastizitätsmodul des Materials für die Klemmbacken 4, 6 gewählt werden kann, desto genauer sind die Prothesenzähne auch während der Bearbeitung positioniert und orientiert.

Nach der Fixierung der Prothesenzähne 1 im Mittelbereich zwischen dem basalen Ende 2 und dem koronalen Ende 3 der Prothesenzähne 1 durch die Klemmbacken 4, 6 wird die darunter liegende Trägerplatte 8 entfernt.

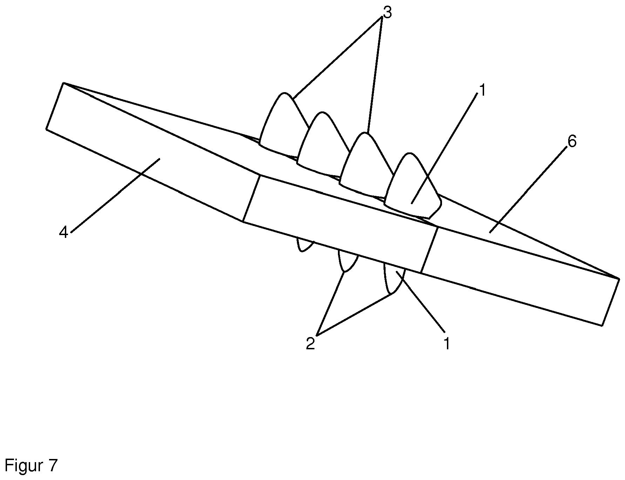

Figur 7 zeigt eine schematische perspektivische Ansicht der Vorrichtung, in der die vier Prothesenzähnen 1 fixiert sind und die Trägerplatte 8 entfernt wurde. Gut ist zu erkennen, dass die basalen Seiten 2 und die koronalen Seiten 3 der Prothesenzähne 1 auf jeweils einer Seite der Vorrichtung zugänglich sind und bearbeitet werden können. Die Vorrichtung wird mit den fixierten vier Prothesenzähnen 1 anschließend in eine Vier-Achs-Fräse oder eine andere Vorrichtung zur Umsetzung eines CAM-Verfahrens eingespannt.

Die Bearbeitung der Prothesenzähne 1 kann anhand von zuvor im Mundraum aufgenommenen Daten erfolgen, um die Prothesenzähne 1 an die Mundraumsituation anzupassen. Für einen guten Sitz werden die Prothesenzähne 1 dazu basal bearbeitet und für eine gute Okklusion werden die koronalen Seiten 3 der Prothesenzähne 1 bearbeitet. Solche Verfahren sind bekannt und für Details hierzu sei auf die WO 2011/066 895 A1 verwiesen.

Nach der Bearbeitung der Prothesenzähne 1 wird die Vorrichtung wieder aus der Fräsmaschine entnommen und die beiden Klemmbacken 4, 6 voneinander getrennt. Die Prothesenzähne 1 liegen dann vereinzelt vor und können bei einem Patienten eingesetzt werden.

Figur 8 zeigt eine schematische perspektivische Ansicht einer alternativen erfindungsgemäßen Vorrichtung mit drei Klemmbacken 4, 6, 14, in der zwölf Prothesenzähne 1 in zwei Reihen fixiert sind. Die erste Klemmbacke 4 und die zweite Klemmbacke 6 weisen jeweils sechs halbrunde Ausnehmungen zur Aufnahme der Prothesenzähne 1 auf. Die mittlere dritte Klemmbacke 14 weist an zwei gegenüberliegenden Randseiten jeweils sechs halbrunde Ausnehmungen auf, so dass die dritte Klemmbacke 14 insgesamt zwölf Ausnehmungen hat.

Die Prothesenzähne 1 können zuvor auf zwei Trägerplatten oder einem anderen Träger oder einer Halterung in den gezeigten Positionen und Orientierungen in jeweils einer Reihe aufgelegen haben oder die Prothesenzähne 1 werden einfach in die Ausnehmungen der mittleren Trägerplatte 14 gesteckt. Die Positionen müssen auf dem Träger noch nicht exakt sein, da die Prothesenzähne 1 beim Anlegen und befestigen der Klemmbacken 4, 6, 14 in die richtige Position und Orientierung gebracht werden, sofern nur kleine Abweichungen auf dem Träger vorhanden waren.

Die erste Klemmbacke 4 wird mit einer Feder 7 in eine Nut der dritten Klemmbacke 14 gesteckt und die beiden Klemmbacken 4, 14 mit den fixierten Prothesenzähnen 1 in den Ausnehmungen dadurch aneinander befestigt. Anschließend werden sechs weitere Prothesenzähne 1 über ein Trägersystem oder ohne Trägersystem an die freigebliebenen sechs Ausnehmungen der dritten Klemmbacke 14 angelegt und die dritte Klemmbacke 14 wird mit einer Feder 15 in eine Nut der zweiten Klemmbacke 6 mit dieser verbunden.

Alternativ kann auch vorgesehen sein, dass auf einer einzelnen Trägerplatte (nicht gezeigt) im mittleren Bereich die mittlere Klemmbacke 14 bereits aufliegt oder lose befestigt ist, anschließend die Prothesenzähne 1 in zwölf Mulden der Trägerplatte eingesetzt und in die zwölf Ausnehmungen der mittleren Klemmbacke 14 angelegt werden. Danach werden die beiden anderen Klemmbacken 4, 6 von außen an die Prothesenzähne 1 in der Trägerplatte und an die mittlere Klemmbacke 14 angelegt. Danach wird die Trägerplatte entfernt, so dass sich der in Figur 8 gezeigte Aufbau ergibt.

In jedem Fall können die so fixierten Prothesenzähne 1 anschließend basal und koronal bearbeitet werden, da sowohl die basalen Seiten 2 als auch die koronalen Seiten 3 der Prothesenzähne 1 zugänglich sind.

Figur 9 zeigt eine schematische Aufsicht auf eine weitere alternative Ausführungsform der Erfindung. In der gezeigten Vorrichtung sind drei Prothesenzähne 21 zwischen zwei Klemmbacken 24, 26 fixiert. Durch die Aufsicht sind in Figur 9 die Okklusionsflächen der Prothesenzähne 21 also die koronalen Seiten der Prothesenzähne 21 zu erkennen. Im Unterschied zu den bisher gezeigten Ausführungsformen liegen hier die beiden Klemmbacken 24, 26 nicht direkt aneinander an, sondern sind durch die Prothesenzähne 21 und einen Spalt 30 voneinander getrennt.

An jeweils zwei gegenüberliegenden Seiten der Klemmbacken 24, 26 ist jeweils eine Lochplatte 27 befestigt, über die die Klemmbacken 24, 26 aneinander befestigt werden können. Die Befestigung erfolgt mit je einer Schraube 28, die jeweils durch Löcher der Lochplatten 27 beider Klemmbacken 24, 26 durchgesteckt ist und auf der Gegenseite durch je eine Kontermutter 29 fixiert wird.

Die Prothesenzähne 21 liegen formschlüssig und flächenbündig in je drei Ausnehmungen der Klemmbacken 24, 26 an. Durch die Beabstandung der beiden Klemmbacken 24, 26 lastet der gesamte Druck nur auf den Prothesenzähnen 21, so dass eine besonders stabile Halterung erreicht wird. Der Druck kommt dabei vor allem aus zwei Richtungen (in Figur 9 von rechts und links), während die Haltekraft in der Richtung senkrecht dazu (in Figur 9 von oben und unten) schwächer als bei einer vollständig umgebenden Passform ist. Die Ausnehmungen der Klemmbacken 24, 26 bilden dafür keine Durchführungen durch die Vorrichtung. Stattdessen bleibt im zusammengesetzten Zustand in der Vorrichtung ein Spalt 30, wobei die Prothesenzähne 21 innerhalb des Spaltes 30 in den dafür vorgesehenen Ausnehmungen der Klemmbacken 24, 26 positioniert werden.

Eine einfache Schraubzwinge mit ebenen Pressbacken wäre ungeeignet, da dies die Prothesenzähne 1, 21 zu stark punktuell belasten würde und eine Drehung um die Achse der Kontaktpunkte möglich wäre. Daher ist es für die vorliegende Erfindung von zentraler Bedeutung einen flächigen beziehungsweise formschlüssigen Kontakt zwischen den Prothesenzähnen 1, 21 und den Klemmbacken 4, 6, 14, 24, 26 herzustellen.

Es versteht sich, dass die Vorrichtung für die gezeigten Anzahlen von Prothesenzähnen neben den gezeigten Ausführungsbeispielen mit einem, drei, vier, sechs und zwölf Prothesenzähnen ohne weiteres auf andere geradzahlige und ungeradzahlige Prothesenzähnen übertragbar sind.

### Bezugszeichenliste

- 1: Prothesenzahn
- 2: Basale Seite eines Prothesenzahns
- 3: Koronale Seite eines Prothesenzahns
- 4: Klemmbacke
- 6: Klemmbacke
- 7: Feder / Stift
- 8: Trägerplatte
- 10: Mulde / Aufnahme
- 12: Klickmechanismus / Rastung
- 14: Mittlere Klemmbacke
- 15: Feder
- 21: Prothesenzahn
- 24: Klemmbacke
- 26: Klemmbacke
- 27: Lochplatte
- 28: Schraube
- 29: Mutter
- 30: Spalt

## Patentansprüche

1. Verfahren zur Positionierung und Bearbeitung von Prothesenzähnen (1, 21) aufweisend die folgenden Verfahrensschritte:
1) Wenigstens zwei Klemmbacken (4, 6, 14, 24, 26) mit randseitigen Ausnehmungen werden mit den randseitigen Ausnehmungen an einem vorkonfektionierten Prothesenzahn (1, 21) oder an vorkonfektionierten Prothesenzähnen (1, 21) angelegt, so dass die angelegten Klemmbacken (4, 6, 14, 24, 26) den Prothesenzahn (1, 21) oder die Prothesenzähne (1, 21) an jeweils einem mittleren Umfang zumindest bereichsweise umschließen, wobei die Innenflächen der Ausnehmungen zumindest bereichsweise formschlüssig zu Bereichen der Außenflächen des Prothesenzahns (1, 21) oder der Prothesenzähne (1, 21) passen, wobei die Klemmbacken (4, 6, 14, 24, 26) derart an dem Prothesenzahn (1, 21) oder den Prothesenzähnen (1, 21) angelegt werden, dass das koronale Ende (3) und das basale Ende (2) des Prothesenzahns (1, 21) oder die koronalen Enden (3) und die basalen Enden (2) der Prothesenzähne (1, 21) auf beiden Seiten der zusammengesetzten Klemmbacken (4, 6, 14, 24, 26) überstehen; und
2) Befestigen der Klemmbacken (4, 6, 14, 24, 26) miteinander.

2. Verfahren nach Anspruch 1, **dadurch gekennzeichnet, dass**
die Klemmbacken (4, 6, 14, 24, 26) derart an dem Prothesenzahn (1, 21) oder den Prothesenzähnen (1, 21) angelegt werden, dass die Klemmbacken (4, 6, 14, 24, 26) an einander und/oder an dem Prothesenzahn (1, 21) oder die Klemmbacken (4, 6, 14, 24, 26) an einander und/oder an den Prothesenzähnen (1, 21) formschlüssig und flächenbündig anliegen.

3. Verfahren nach Anspruch 1 oder 2, **dadurch gekennzeichnet, dass**
der vorkonfektionierte Prothesenzahn (1, 21) oder die vorkonfektionierten Prothesenzähne (1, 21) koronal und/oder basal auf einen Träger (8) gesetzt werden, bevor sie von den Klemmbacken (4, 6, 14, 24, 26) fixiert werden und der Träger (8) von den Klemmbacken (4, 6, 14, 24, 26) und dem oder den in den Klemmbacken gehaltenen Prothesenzähnen (1, 21) entfernt wird, nachdem die Klemmbacken (4, 6, 14, 24, 26) miteinander verbunden wurden.

4. Verfahren nach einem der vorangehenden Ansprüche, **dadurch gekennzeichnet, dass**
nach dem Entfernen des Trägers (8) die miteinander befestigten Klemmbacken (4, 6, 14, 24, 26) in einer definierten Position in einer Halterung einer CAM-Vorrichtung zum Abtragen von Material der Prothesenzähne (1, 21) oder des Prothesenzahns (1, 21) mit einem CAM-Verfahren befestigt werden und wenigstens ein koronales Ende (3) und/oder wenigstens ein basales Ende (2) zumindest eines Prothesenzahns (1, 21) computergesteuert mit der CAM-Vorrichtung bearbeitet wird, wobei die CAM-Vorrichtung bevorzugt eine CAM-gesteuerte Fräseinrichtung ist, besonders bevorzugt eine CAM-gesteuerte Vier-Achs-Fräse.

5. Verfahren nach einem der vorangehenden Ansprüche, **dadurch gekennzeichnet, dass**
die äußeren Formen aller verwendeten vorkonfektionierten Prothesenzähne (1, 21) als erster Datensatz vorliegen und ein zweiter Datensatz die genaue Positionen aller fixierten vorkonfektionierten Prothesenzähne (1, 21) in den zusammengesetzten Klemmbacken (4, 6, 14, 24, 26) definiert, wobei eine anschließende Bearbeitung des Prothesenzahns (1, 21) oder der Prothesenzähne (1, 21) auf Basis des ersten und des zweiten Datensatzes durchgeführt wird, bevorzugt eine anschließende Bearbeitung mit einem CAM/CAD-Verfahren.

6. Verfahren nach einem der vorangehenden Ansprüche, **dadurch gekennzeichnet, dass**
der verwendete vorkonfektionierte Prothesenzahn (1, 21) oder die verwendeten vorkonfektionierten Prothesenzähne (1, 21) mit einem CAD-Verfahren hergestellt werden, wobei die Daten, die zur Bestimmung der äußeren Form der Oberfläche des vorkonfektionierten Prothesenzahns (1, 21) oder der vorkonfektionierten Prothesenzähne (1, 21) verwendet werden, zur Ausformung der Ausnehmungen der Klemmbacken (4, 6, 14, 24, 26) verwendet werden, wobei vorzugsweise zumindest die Ausnehmungen in den Klemmbacken (4, 6, 14, 24, 26) mit einem CAD/CAM-Verfahren hergestellt werden.

7. Verfahren nach einem der vorangehenden Ansprüche, **dadurch gekennzeichnet, dass**
in Schritt 1) die Klemmbacken (4, 6, 14, 24, 26) derart an den Prothesenzahn (1, 21) oder die Prothesenzähne (1, 21) angelegt werden, dass die angelegten Klemmbacken (4, 6, 14, 24, 26) den Prothesenzahn (1, 21) oder die Prothesenzähne (1, 21) an jeweils einem mittleren Umfang ringförmig vollständig umschließen und die Klemmbacken (4, 6, 14, 24, 26) beidseitig des Prothesenzahns (1, 21) oder der Prothesenzähne (1, 21) flächig aneinander anliegen, wobei jeder Prothesenzahn (1, 21) in einer separaten durchgehenden Durchführung der zusammengesetzten Klemmbacken (4, 6, 14, 24, 26) fixiert wird und jede Durchführung durch die Ausnehmungen wenigstens zweier Klemmbacken (4, 6, 14, 24, 26) gebildet wird, und in Schritt 2) die Klemmbacken (4, 6, 14, 24, 26) an einander befestigt werden.

8. Vorrichtung zur Halterung von Prothesenzähnen (1, 21) aufweisend zumindest zwei miteinander zusammensetzbare oder zusammengesetzte Klemmbacken (4, 6, 14, 24, 26), die randseitig an den Klemmbacken (4, 6, 14, 24, 26) angeordnete Ausnehmungen aufweisen, wobei die Vorrichtung im zusammengesetzten Zustand wenigstens eine durchgehende Durchführung oder zumindest eine durchgehende Spalte (30) aufweist, vorzugsweise mehrere durchgehende Durchführungen aufweist, wobei jede Durchführung oder Spalte (30) durch die randseitig an den Klemmbacken (4, 6, 14, 24, 26) angeordneten Ausnehmungen jeweils wenigstens zweier Klemmbacken (4, 6, 14, 24, 26) begrenzt sind, wobei die inneren Oberflächen der Ausnehmungen zumindest bereichsweise jeweils ein Negativ eines Teils der Oberfläche eines bestimmten vorkonfektionierten Prothesenzahns (1, 21) bilden, so dass, wenn der bestimmte Prothesenzahn (1, 21) in die Durchführung oder die Ausnehmungen der Spalte (30) eingesetzt ist, er aus zumindest drei Richtungen von den zusammengesetzten und aneinander befestigten Klemmbacken (4, 6, 14, 24, 26) in Presspassung gehalten ist.

9. Vorrichtung nach Anspruch 8, **dadurch gekennzeichnet, dass**
an den Klemmbacken (4, 6, 14, 24, 26) Befestigungsmittel (7, 12, 27) vorgesehen sind, über die die Klemmbacken (4, 6, 14, 24, 26) aneinander zu befestigen sind.

10. Vorrichtung nach Anspruch 8 oder 9, **dadurch gekennzeichnet, dass**
die Klemmbacken (4, 6, 14, 24, 26) aus einem harten nicht verformbaren Material bestehen, bevorzugt aus einem Material mit einem Elastizitätsmodul von wenigstens 1,5 GPa besonders bevorzugt von wenigstens 4 GPa.

11. Vorrichtung nach einem der Ansprüche 8 bis 10, **dadurch gekennzeichnet, dass**
der Prothesenzahn (1, 21) oder die Prothesenzähne (1, 21) nur in einer vorgegebenen Position und Orientierung in den zusammengesetzten Klemmbacken (4, 6, 14, 24, 26) fixierbar sind.

12. Vorrichtung nach einem der Ansprüche 8 bis 11, **dadurch gekennzeichnet, dass**
das koronale Ende (3) und das basale Ende (2) des Prothesenzahns (1, 21) oder die koronalen Enden (3) und die basalen Enden (2) der Prothesenzähne (1, 21) auf beiden Seiten der zusammengesetzten Klemmbacken (4, 6, 14, 24, 26) überstehen, wenn der Prothesenzahn (1, 21) oder die Prothesenzähne (1, 21) in die zusammengesetzten Klemmbacken eingesetzt ist oder sind.

13. Set zur Durchführung eines Verfahrens nach einem der Ansprüche 1 bis 7 aufweisend wenigstens einen vorkonfektionierten Prothesenzahn (1, 21), vorzugsweise eine Mehrzahl vorkonfektionierter Prothesenzähne (1, 21), und wenigstens eine Vorrichtung nach einem der Ansprüche 8 bis 12.

14. Set nach Anspruch 13, **dadurch gekennzeichnet, dass**
das Set zusätzlich einen Träger (8) mit wenigstens einer Mulde (10) zur Aufnahme eines koronalen Endes (3) oder basalen Endes (2) zumindest eines vorkonfektionierten Prothesenzahns (1, 21) aufweist, insbesondere eine Trägerplatte (8) mit wenigstens einer Mulde (10) zur Aufnahme eines koronalen Endes (3) oder basalen Endes (2) eines vorkonfektionierten Prothesenzahns (1, 21) aufweist.

15. Set nach Anspruch 13 oder 14, **dadurch gekennzeichnet, dass**
das Set zusätzlich den ersten Datensatz zur äußeren Form aller vorkonfektionierten Prothesenzähne (1, 21) und den zweiten Datensatz zur Position der vorkonfektionierten Prothesenzähne (1, 21) in den zusammengesetzten Klemmbacken (4, 6, 14, 24, 26) enthält, bevorzugt auf einem Datenträger.

## Claims

1. A method for positioning and machining prosthetic teeth (1, 21), comprising the following method steps:
1) at least two clamping jaws (4, 6, 14, 24, 26) with peripheral recesses are placed with the peripheral recesses against a prefabricated prosthetic tooth (1, 21) or against prefabricated prosthetic teeth (1, 21), such that, at least in certain regions, the placed clamping jaws (4, 6, 14, 24, 26) enclose the prosthetic tooth (1, 21) or the prosthetic teeth (1, 21) respectively around a middle circumference, wherein, at least in certain regions, the inner surfaces of the recesses positive fit regions of the outer surfaces of the prosthetic tooth (1, 21) or the prosthetic teeth (1, 21), wherein the clamping jaws (4, 6, 14, 24, 26) are placed against the prosthetic tooth (1, 21) or the prosthetic teeth (1, 21) in such a manner that the coronal end (3) and the basal end (2) of the prosthetic tooth (1, 21) or the coronal ends (3) and the basal ends (2) of the prosthetic teeth (2, 21) project on both sides of the placed-together clamping jaws (4, 6, 14, 24, 26); and
2) fastening the clamping jaws (4, 6, 14, 24, 26) to one another.

2. The method according to claim 1, **characterized in that**
the clamping jaws (4, 6, 14, 24, 26) are placed against the prosthetic tooth (1, 21) or the prosthetic teeth (1, 21) in such a manner that the clamping jaws (4, 6, 14, 24, 26) are in positive fitting contact and flush with one another and/or with the prosthetic tooth (1, 21), or the clamping jaws (4, 6, 14, 24, 26) are in positive fitting contact and flush with one another and/or with the prosthetic teeth (1,21).

3. The method according to claim 1 or 2, **characterized in that**
the prefabricated prosthetic tooth (1, 21) or the prefabricated prosthetic teeth (1, 21) are coronally and/or basally set onto a carrier (8) before being fixed by the clamping jaws (4, 6, 14, 24, 26), and that the carrier (8) is removed from the clamping jaws (4, 6, 14, 24, 26) and the prosthetic tooth or prosthetic teeth (1, 21) held in the clamping jaws after the clamping jaws (4, 6, 14, 24, 26) have been connected to one another.

4. The method according to any one of the preceding claims, **characterized in that** after removing the carrier (8), the clamping jaws (4, 6, 14, 24, 26) attached to one another are fastened in a defined position in a holder of a CAM device for material removal from the prosthetic teeth (1, 21) or the prosthetic tooth (1, 21) in a CAM process, and at least one coronal end (3) and/or at least one basal end (2) of at least one prosthetic tooth (1, 21) is machined in a computer-controlled process using the CAM device, wherein the CAM device preferably is a CAM-controlled milling cutter, particularly preferred a CAM-controlled four-axis milling cutter.

5. The method according to any one of the preceding claims, **characterized in that**
the outer shapes of all prefabricated prosthetic teeth (1, 21) used are available as a first dataset, and a second dataset defines the exact positions of all fixed prefabricated prosthetic teeth (1, 21) in the placed-together clamping jaws (4, 6, 14, 24, 26), wherein subsequent machining of the prosthetic tooth (1, 21) or the prosthetic teeth (1, 21) is performed based on the first and the second dataset, preferably subsequent machining using a CAD/CAM process.

6. The method according to any one of the preceding claims, **characterized in that**
the prefabricated prosthetic tooth (1, 21) used or the prefabricated prosthetic teeth (1, 21) used are produced using a CAD process, wherein the data used to determine the outer shape of the surface of the prefabricated prosthetic tooth (1, 21) or the prefabricated prosthetic teeth (1, 21) are used for shaping the recesses of the clamping jaws (4, 6, 14, 24, 26), wherein preferably at least the recesses in the clamping jaws (4, 6, 14, 24, 26) are produced using a CAD/CAM process.

7. The method according to any one of the preceding claims, **characterized in that** in step 1) the clamping jaws (4, 6, 14, 24, 26) are placed against the prosthetic tooth (1, 21) or the prosthetic teeth (1, 21) in such a manner that the placed clamping jaws (4, 6, 14, 24, 26) form a complete ring around the prosthetic tooth (1, 21) or the prosthetic teeth (1, 21) at a middle circumference each and that the clamping jaws (4, 6, 14, 24, 26) lie flat on one another on both sides of the prosthetic tooth (1, 21) or the prosthetic teeth (1, 21), wherein each prosthetic tooth (1, 21) is fixed in a separate continuous passage of the placed-together clamping jaws (4, 6, 14, 24, 26) and each passage is formed by the recesses of at least two clamping jaws (4, 6, 14, 24, 26) in step 1), and the clamping jaws (4, 6, 14, 24, 26) are fastened to one another in step 2).

8. A device for holding prosthetic teeth (1, 21), comprising at least two clamping jaws (4, 6, 14, 24, 26) that can be or are placed together and that comprise recesses arranged on the periphery of the clamping jaws (4, 6, 14, 24, 26), wherein the device in its placed-together state comprises at least one continuous passage or at least one continuous gap (30), preferably multiple continuous passages, wherein each passage or gap (30) is defined by the recesses arranged on the periphery of the clamping jaws (4, 6, 14, 24, 26) of at least two clamping jaws (4, 6, 14, 24, 26) each, wherein the inner surfaces of the recesses, at least in certain regions, form a negative of a portion of the surface of a specific prefabricated prosthetic tooth (1, 21), such that, when said specific prosthetic tooth (1, 21) is inserted in the passage or the recesses of the gap (30), it is held in a press fit from at least three directions by the placed-together clamping jaws (4, 6, 14, 24, 26) that are fastened to one another.

9. The device according to claim 8, **characterized in that**
fastening means (7, 12, 27) are provided on the clamping jaws (4, 6, 14, 24, 26) by which the clamping jaws (4, 6, 14, 24, 26) can be fastened to one another.

10. The device according to claim 8 or 9, **characterized in that**
the clamping jaws (4, 6, 14, 24, 26) are made of a hard non-deformable material, preferably of a material with a modulus of elasticity of at least 1.5 GPa, particularly preferred at least 4 GPa.

11. The device according to any one of claims 8 to 10, **characterized in that**
the prosthetic tooth (1, 21) or the prosthetic teeth (1, 21) are fixable in one predetermined position and orientation only in the placed-together clamping jaws (4, 6, 14, 24, 26).

12. The device according to any one of claims 8 to 11, **characterized in that**
the coronal end (3) and the basal end (2) of the prosthetic tooth (1, 21) or the coronal ends (3) and the basal ends (2) of the prosthetic teeth (1, 21) project on both sides of the placed-together clamping jaws (4, 6, 14, 24, 26) when the prosthetic tooth (1, 21) is or the prosthetic teeth (1, 21) are inserted in the placed-together clamping jaws.

13. A kit for performing a method according to any one of claims 1 to 7, comprising at least one prefabricated prosthetic tooth (1, 21), preferably a plurality of prefabricated prosthetic teeth (1, 21), and at least one device according to any one of claims 8 to 12.

14. The kit according to claim 13, **characterized in that**
the kit additionally includes a carrier (8) with at least one cavity (10) for receiving a coronal end (3) or basal end (2) of at least one prefabricated prosthetic tooth (1, 21), particularly a carrier plate (8) with at least one cavity (10) for receiving a coronal end (3) or basal end (2) of a prefabricated prosthetic tooth (1, 21).

15. The kit according to claim 13 or 14, **characterized in that**
the kit in addition contains the first dataset of the outer shape of all prefabricated prosthetic teeth (1, 21) and the second dataset of the position of the prefabricated prosthetic teeth (1, 21) in the placed-together clamping jaws (4, 6, 14, 24, 26), preferably on a data carrier.

## Revendications

1. Procédé destiné au positionnement et au traitement de dents prothétiques (1, 21) présentant les étapes de procédé suivantes :
1) au moins deux mâchoires de serrage (4, 6, 14, 24, 26) avec des évidements au niveau des bords sont appliquées à l'aide des évidements des bords sur une dent prothétique (1, 21) préfabriquée ou sur des dents prothétiques (1, 21) préfabriquées, de sorte que les mâchoires de serrage (4, 6, 14, 24, 26) appliquées entourent au moins par endroits la dent prothétique (1, 21) ou les dents prothétiques (1, 21) respectivement au niveau de leur pourtour central, où les surfaces intérieures des évidements sont ajustées au moins par endroits par complémentarité des formes à des zones des surfaces extérieures de la dent prothétique (1, 21) ou des dents prothétiques (1, 21), où les mâchoires de serrage (4, 6, 14, 24, 26) sont appliquées sur la dent prothétique (1, 21) ou les dents prothétiques (1, 21) de telle manière que l'extrémité en couronne (3) et l'extrémité de la base (2) de la dent prothétique (1, 21), ou les extrémités en couronne (3) et les extrémités des bases (2) des dents prothétiques (1, 21) dépassent sur les deux côtés des mâchoires de serrage (4, 6, 14, 24, 26) assemblées ; et
2) la fixation des mâchoires de serrage (4, 6, 14, 24, 26) ensemble.

2. Procédé selon la revendication 1, **caractérisé en ce que**
les mâchoires de serrage (4, 6, 14, 24, 26) sont appliquées sur la dent prothétique (1, 21) ou sur les dents prothétiques (1, 21) de telle manière que les mâchoires de serrage (4, 6, 14, 24, 26) s'appliquent l'une à l'autre et/ou sur la dent prothétique (1, 21) ou les mâchoires de serrage (4, 6, 14, 24, 26) s'appliquent l'une à l'autre et/ou sur les dents prothétiques (1, 21) par complémentarité des formes et par complémentarité des surfaces.

3. Procédé selon la revendication 1 ou 2, **caractérisé en ce que**
la dent prothétique (1, 21) préfabriquée ou les dents prothétiques (1, 21) préfabriquées sont implantées en couronne et/ou par la base sur un support (8) avant qu'elles ne soient fixées par les mâchoires de serrage (4, 6, 14, 24, 26) et le support (8) est enlevé des mâchoires de serrage (4, 6, 14, 24, 26) et de la dent ou des dents prothétiques (1, 21) maintenues dans les mâchoires de serrage, après que les mâchoires de serrage (4, 6, 14, 24, 26) aient été reliées ensemble.

4. Procédé selon l'une des revendications précédentes, **caractérisées en ce**
**qu'**après le retrait du support (8), les mâchoires de serrage (4, 6, 14, 24, 26) fixées ensemble dans une position définie dans un support d'un dispositif CAM prévu pour le dépôt de matière des dents prothétiques (1, 21) ou de la dent prothétique (1, 21) sont fixées avec un procédé CAM et au moins une extrémité en couronne (3) et/ou au moins une extrémité de base (2) d'au moins une dent prothétique (1, 21) est traitée avec le dispositif CAM assisté par ordinateur, où le dispositif CAM est de préférence une fraise à quatre axes assistée par le CAM.

5. Procédé selon l'une des revendications précédentes, **caractérisé en ce que**
les formes extérieures de toutes les dents prothétiques (1, 21) préfabriquées employées se présentent sous forme d'un premier ensemble de données et un deuxième ensemble de données définit les positions précises de toutes les dents prothétiques (1, 21) préfabriquées fixées dans les mâchoires de serrage (4, 6, 14, 24, 26) assemblées, où le façonnage ultérieur de la dent prothétique (1, 21) ou des dents prothétiques (1, 21) est effectué sur la base du premier et du deuxième ensemble de données, de préférence, un façonnage ultérieur avec un procédé CAM/CAD.

6. Procédé selon l'une des revendications précédentes, **caractérisé en ce que**
la dent prothétique (1, 21) préfabriquée utilisée ou les dents prothétiques (1, 21) préfabriquées utilisées sont fabriquées avec un procédé CAD, où les données qui sont utilisées pour la détermination de la forme extérieure des surfaces de la dent prothétique (1, 21) préfabriquée ou des dents prothétiques (1, 21) préfabriquées, pour la formation des évidements des mâchoires de serrage (4, 6, 14, 24, 26), où de préférence au moins les évidements dans les mâchoires de serrage (4, 6, 14, 24, 26) sont fabriqués avec un procédé CAD/CAM.

7. Procédé selon l'une des revendications précédentes, **caractérisé en ce que** dans l'étape 1), les mâchoires de serrage (4, 6, 14, 24, 26) sont appliquées de telle manière contre la dent prothétique (1, 21) ou les dents prothétiques (1, 21), que les mâchoires de serrage (4, 6, 14, 24, 26) appliquées entourent totalement, sous la forme d'un anneau, la dent prothétique (1, 21) ou les dents prothétiques (1, 21) respectivement au niveau d'un pourtour central et les mâchoires de serrage (4, 6, 14, 24, 26) s'appliquent l'une à l'autre à plat sur les deux côtés de la dent prothétique (1, 21) ou des dents prothétiques (1, 21), où chaque dent prothétique (1, 21) est fixée dans un passage continu séparé des mâchoires de serrage (4, 6, 14, 14, 24, 26) assemblées et chaque passage est formé par les évidements d'au moins deux mâchoires de serrage (4, 6, 14, 24, 26), et dans l'étape 2), les mâchoires de serrage (4, 6, 14, 24, 26) sont fixées les unes aux autres.

8. Dispositif destiné au maintien de dents prothétiques (1, 21) présentant au moins deux mâchoires de serrage (4, 6, 14, 24, 26) pouvant être assemblées ou assemblées, qui présentent des évidements disposés au niveau des bords sur les mâchoires de serrage (4, 6, 14, 24, 26), où le dispositif, dans l'état assemblé, présente au moins un passage de part en part ou une fente de part en part (30), de préférence présente plusieurs passages de part en part, où chaque passage ou fente (30) est limité par les évidements disposés au niveau des bords sur les mâchoires de serrage (4, 6, 14, 24, 26) de respectivement au moins deux des mâchoires de serrage (4, 6,14, 24, 26), où les surfaces intérieures des évidements forment respectivement au moins par endroits un négatif d'une partie de la surface d'une dent prothétique (1, 21) préfabriquée déterminée, de sorte que, lorsque la dent prothétique (1, 21) déterminée est implantée dans le passage ou dans les évidements de la fente (30), elle est maintenu dans un ajustement par compression à partir d'au moins trois directions par les mâchoires de serrage (4, 6, 14, 24, 26) assemblées et fixées ensemble.

9. Dispositif selon la revendication 8, **caractérisé en ce que**
des moyens de fixation (7, 12, 27) sont prévus sur les mâchoires de serrage (4, 6, 14, 24, 26), par l'intermédiaire desquels les mâchoires de serrage (4, 6, 14, 24, 26) sont à fixer ensemble.

10. Dispositif selon la revendication 8 ou 9, **caractérisé en ce que**
les mâchoires de serrage (4, 6, 14, 24, 26) sont constituées d'un matériau dur non déformable, de préférence à base d'un matériau avec un module d'élasticité d'au moins 1,5 GPa, de manière particulièrement préférée d'au moins 4 GPa.

11. Dispositif selon l'une des revendications 8 à 10, **caractérisé en ce que**
la dent prothétique (1, 21), ou les dents prothétiques (1, 21) ne peuvent être fixées que dans une position et une orientation prédéterminées dans les mâchoires de serrage (4, 6, 14, 24, 26) assemblées.

12. Dispositif selon l'une des revendications 8 à 11, **caractérisé en ce que**
l'extrémité en couronne (3) et l'extrémité de la base (2) de la dent prothétique (1, 21) ou les extrémités en couronne (3) et les extrémités de base (2) des dents prothétiques (1, 21) dépassent sur les deux côtés des mâchoires de serrage (4, 6, 14, 24, 26) assemblées lorsque la dent prothétique (1, 21) ou les dents prothétiques (1, 21) est ou sont implantées dans les mâchoires de serrage assemblées.

13. Ensemble destiné à l'exécution d'un procédé selon l'une des revendications 1 à 7 présentant au moins une dent prothétique (1, 21) préfabriquée, de préférence, un grand nombre de dents prothétiques (1, 21) préfabriquées, et au moins un dispositif selon l'une des revendications 8 à 12.

14. Ensemble selon la revendication 13, **caractérisé en ce que**
l'ensemble présente en supplément un support (8) avec au moins un creux (10) pour l'admission d'une extrémité en couronne (3) ou d'une extrémité de base (2) d'au moins une dent prothétique (1, 21) préfabriquée, notamment, une plaque de support (8) avec au moins un creux (10) pour l'admission d'une extrémité en couronne (3) ou d'une extrémité de base (2) d'une dent prothétique (1, 21) préfabriquée.

15. Ensemble selon la revendication 13 ou 14, caractérisé e ce que
l'ensemble contient en supplément le premier ensemble de données destiné à la forme extérieure de toutes les dents prothétiques (1, 21) préfabriquées et le deuxième ensemble de données destiné à la position des dents prothétiques (1, 21) préfabriquées dans les mâchoires de serrage (4, 6, 14, 24, 26) assemblées, de préférence sur un support de données.
